## Europäisches Patentamt
## European Patent Office
## Office européen des brevets

(19)

(11) Veröffentlichungsnummer: **0 167 908**
**B1**

(12) **EUROPÄISCHE PATENTSCHRIFT**

(45) Veröffentlichungstag der Patentschrift: **04.04.90**

(21) Anmeldenummer: **85107732.1**

(22) Anmeldetag: **22.06.85**

(51) Int. Cl.⁵: **C 08 G 69/40,** C 08 G 69/18

(54) **Verzweigte, thermoplastisch verarbeitbare, schlagzähe Polyamide.**

(30) Priorität: **10.07.84 DE 3425318**

(43) Veröffentlichungstag der Anmeldung:
**15.01.86 Patentblatt 86/03**

(45) Bekanntmachung des Hinweises auf die
Patenterteilung:
**04.04.90 Patentblatt 90/14**

(84) Benannte Vertragsstaaten:
**BE CH DE FR GB IT LI NL**

(56) Entgegenhaltungen:
**EP-A-0 088 560**
**US-A-3 763 077**

**PATENT ABSTRACTS OF JAPAN, Band 9, Nr.**
**184 (C-294)1907r, 30. Juli 1985; & JP - A - 60**
**53536 (UBE KOSAN K.K.) 03.05.1985**

**Die Akte enthält technische Angaben, die nach**
**dem Eingang der Anmeldung eingereicht**
**wurden und die nicht in dieser Patentschrift**
**enthalten sind.**

(73) Patentinhaber: **BAYER AG**
**D-5090 Leverkusen 1 Bayerwerk (DE)**

(72) Erfinder: **Meyer, Rolf-Volker, Dr.**
**Buchheimer Strasse 23**
**D-4150 Krefeld (DE)**
Erfinder: **Fahnler, Friedrich, Dipl.-Ing.**
**Wimmersweg 60**
**D-4150 Krefeld (DE)**
Erfinder: **Dhein, Rolf, Dr.**
**Deswatinesstrasse 30**
**D-4150 Krefeld (DE)**
Erfinder: **Michael, Dietrich, Dr.**
**Deswatinesstrasse 57**
**D-4150 Krefeld (DE)**
Erfinder: **Weirauch, Kurt, Dr.**
**Am Vogelherd 32**
**D-5060 Bergisch Gladbach (DE)**
Erfinder: **Schäfer, Walter, Dr.**
**Wolfskaul 6**
**D-5000 Köln 80 (DE)**

**Beschreibung**

Gegenstand der Erfindung sind schlagzähe Polyamide, die trotz höheren Anteils an höherfunktionellen Blocksegmenten thermoplastisch verarbeitbar sind sowie ihre Herstellung durch aktivierte anionische· Polymerisation von Lactamen.

Die Herstellung von Polyamiden durch aktivierte anionische Polymerisation von Lactamen ist lange bekannt und wird zur Herstellung verschiedenster Gebrauchsgüter wie z.B. Heizölbatterietanks, Rohren verschiedenster Länge und Durchmesser, Rollen und Zahnrädern eingesetzt.

Während sich diese Polyamide durch zufriedenstellende Steifigkeit und durch sehr gute Selbstschmiereigenschaften auszeichnen, sind sie für Einsatzgebiete, bei denen es auf Schlagbeanspruchung ankommt, weniger gut geeignet. Insbesondere bei tiefen Temperaturen neigen Polyamide im allgemeinen und insbesondere auch die durch aktivierte anionische Polymerisation von Lactamen hergestellten Polyamide zum Sprödbruch und sind kerbempfindlich.

In der US 3 763 077 werden Caprolactam in Gegenwart von Polyetherpolyolen mit einer Funktionalität von z.B. 4 und gegebenenfalls eingebauten tertiären Aminogruppen mit Polymethylen-Polyphenylisocyanaten als Cokatalysatoren in der alkalischen Schnellpolymerisation von Lactamen verwendet. Je nach Art der Polyole werden verschiedene Molekulargewichtsbereiche beansprucht, welche zwischen 3.000 und 20.000 liegen, wobei die speziell beanspruchten Molekulargewichtsbereiche jeweils kritisch im Hinblick auf die Zusammensetzung der Polyole sind.

Zur Verbesserung der Tieftemperaturschlagzähigkeit von durch anionische Polymerisation von Lactamen hergestellten Polyamiden führen übliche Methoden wie z.B. innige Abmischungen mit geeigneten Kautschukkomponenten, nicht zum Ziel, da die elastifizierenden Komponenten mit den reaktiven alkalischen Lactamschmelzen viel zu wenig verträglich sind und es sofort zur Phasentrennung kommt.

Die Mitverwendung von Polyolen, vorzugsweise von Polyetherpolyolen mit hochmolekularem Polyolanteil und niedriger OH-Zahl, führt zwar zu einer graduellen Verbesserung der Schlagzähigkeit, aber auch zu einer unerwünschten Weichmachung und zu höherem Monomer-Extraktgehalt, da die OH-Gruppen die Polymerisation stören können.

In der GB—PS 1 067 153 wird ein Verfahren zur Herstellung von Polyamiden mit verbesserter Schlagzähigkeit durch anionische Polymerisation von Lactamen beschrieben, wobei als Cokatalysator ein Polyurethanprepolymerisat mit NCO-Endgruppen eingesetzt wird, das durch Umsetzung von Diisocyanaten mit den OH-Gruppen von Polyethern hergestellt wurde.

Auch hierdurch wird nur eine mäßige Verbesserung der Schlagzähigkeit erreicht. Auch diese Produkte weisen einen stark erhöhten Lactam-Monomergehalt auf. Zusätzlich ist die Lagerfähigkeit von NCO-Prepolymeren, insbesondere ihre Viskositätsstabilität, kritisch.

Gemäß DOS 2 527 886 werden Polyetherpolyester-Blöcke aus Polyetherpolyolen und Dicarbonsäuren bzw. deren Derivaten hergestellt, die dann mit Lactamen in Gegenwart von metallorganischen Katalysatoren durch anionische Polymerisation zu Block-Terpolymerisaten umgesetzt werden.

Die Herstellung dieser Produkte ist jedoch langwierig, da mehrere Reaktionsstufen erforderlich sind und die anionische Polymerisation tatsächlich nur mit technisch sehr schwierig herstellbaren und handhabbaren Grignard-Katalysatoren gut gelingt.

Ähnliche Produkte werden in der US—PS 4 031 164 beschrieben, bei deren Herstellung zusätzlich (Poly)acyllactame wie z.B. Terephthaloylbis-caprolactam, mitverwendet werden müssen, was ihre Herstellungsverfahren zusätzlich erschwert.

In der EP 0 088 560 wird ein Verfahren zur Herstellung von Polyamiden mit verbesserter Schlagzähigkeit beschrieben, gemäß dem Lactame mit Umsetzungsprodukten eines polyfunktionellen Cokatalysators und Polyoxyalkylendiamine von Molekulargewichten von 300 bis 20.000 zu Blockcopolymeren in Gegenwart eines alkalischen Katalysators umgesetzt werden. Auch Polyoxyalkylentriamine aus Trimethylolpropan (Funktionalität = 3) können mitverwendet werden.

Diese Blockcopolymere können zwar ohne Grignard-Katalysatoren hergestellt werden und zeigen gegenüber unmodifiziertem 6-Polyamid eine verbesserte Kerbschlagzähigkeit, sie genügen jedoch nicht den hohen Schlagzähigkeits- und Kerbschlagzähigkeitsansprüchen, insbesondere denen bei tiefen Temperaturen.

Diese hohen Werte sind insbesondere für Außenteile im Automobilbau erforderlich.

Es besteht daher ein Bedarf an auch bei tiefen Temperaturen hochschlagzähen Polyamiden und Polyamid-Formteilen, die neben der zufriedenstellenden Wärmeformbeständigkeit gute Schlagzähigkeits- und Kerbschlagzähigkeitswerte bei Temperaturen von 0°C bis zu −40°C aufweisen und die technisch gut herstellbar sind.

Überraschenderweise wurde nun gefunden, daß man solche Produkte erhält, die die obengenannten Nachteile nicht aufweisen, wenn man ω-Lactame und Polyether, die Aminoendgruppen aufweisen, in Gegenwart von alkalischen Katalysatoren und polyfunktionellen Aktivatoren, vorzugsweise Polyisocyanaten, polymerisiert, wobei die Polyether eine Funktionalität von mindestens 3,2 und ein Molgewicht von >3.000, vorzugsweise von 4.000 bis 10.000, aufweisen.

Gegenstand der Erfindung sind daher Polyamid-Blockcopolymere, erhalten durch aktivierte, anionische Polymerisation von Lactamen mit wenigstens 5 Ringgliedern in Gegenwart basischer

.2

Katalysatoren, Polyisocyanaten als Aktivatoren und aminoterminierten Polyethern, die dadurch gekennzeichnet sind, daß die aminoterminierten Polyether eine Funktionalität von mindestens 3,2 und ein Molekulargewicht von >3.000, vorzugsweise mindestens 3.500, aufweisen und als Polyisocyanate aliphatische oder cycloaliphatische Polyisocyanate eingesetzt werden.

Als Polyether mit Aminoendgruppen werden vorzugsweise solche der allgemeinen Formel I verwendet

$$\left[ (HO)Y \underbrace{\phantom{xx}}_{m} Z \underbrace{\phantom{xx}}_{\quad} X(NH_2) \right]_n \qquad (I),$$

wobei

Z ein n + m-wertiger Kohlenwasserstoffrest, der gegebenenfalls über eine oder mehrere —O—Brücken verbunden ist, mit m = 0—2, n = 2—8, vorzugsweise 3—6 und n + m = 3,2—6.

X ein Polyetherrest mit der p-mal wiederkehrenden Struktureinheit der Formel II

$$\left[ \begin{array}{c} R^1 \\ | \\ OCH-(CH_2)_q \end{array} \right] \qquad (II),$$

in der $R^1$ H oder einen $C_1$—$C_3$-Alkylrest, q eine ganze Zahl von 1 bis 5, vorzugsweise 1—3, bedeutet und p wenigstens 15 ist,

Y die Bedeutung von X haben kann oder für eine chemische Bindung steht, und im Falle von Polyether-Gemischen n ≥2 mm, vorzugsweise n ≥5 mm, sein muß.

Die erfindungsgemäß zum Einsatz kommenden aminoterminierten Polyether lassen sich in bekannter Weise herstellen, z.B. durch Aminierung der entsprechenden OH-Polyether mit Ammoniak unter Druck. Die für die Aminierungsreaktion erforderlichen OH-terminierten Polyether sind ebenfalls bekannte Produkte, die in bekannter Weise durch Alkoxylierung niedermolekularer Polyole oder Polyamine oder Aminoalkohole, wie z.B. Glycerin, Trimethylolethan, Trimethylolpropan, 1,2,4-Butantriol, 1,2,6-Hexantriol, Pentaerythrit, α,α'-Bis(dimethylolpropan)dimethylether, Sorbit, Saccharose, Triethanolamin, Triisopropanolamin, 1,3,5-Trimethylamino-cyclohexane, 4-(3',4'-Diaminocyclohexyl)cyclohexylamin, 1,5,9-Triamino-cyclododecate, Trimethylamino-cyclododecan-Isomerengemische, Hydrierungsprodukte mehr als 2-kerniger Polyamine der Diphenylmethan-Reihe, Polyalkylenpolyamine, 1,13-Diamino-7-azatridecan, Bismethylamino-hydroxymethyl-cyclododecane, mit $C_2$—$C_4$-Alkylenoxiden wie Ethylenoxid, Propylenoxid, 1,2-Butylenoxid und/oder mit Tetrahydrofuran hergestellt werden, wobei die Polyetherketten homopolymer, statistisch copolymer und/oder auch segmentcopolymer sein können.

Auch ganz oder teilweise aus Hexandiol-1,6 aufgebaute Polyether sind geeignet.

Vorzugsweise werden Amino-terminerte Polyether eingesetzt, die, ausgehend von Glycerin, Trimethylolpropan, Pentaerythrit, α,α'-Bis(dimethylolpropan)dimethylether, Sorbit gewonnen wurden.

Vorzugsweise werden zum Aufbau der Polyetherketten überwiegend Propylenoxid und Tetrahydrofuran eingesetzt.

Der Aminierungsgrad der erfindungsgemäß einzusetzenden Amino-terminerten Polyether beträgt mindestens 60%, vorzugsweise ≥85%, ganz besonders bevorzugt ≥95%.

Die Molgewichte der erfindungsgemäß einzusetzenden Polyether liegen vorzugsweise bei mindestens 3500, besonders bevorzugt im Bereich von 4000 bis 10000. Die erfindungsgemäß einzusetzenden Amino-terminierten Polyether können sowohl einzeln als auch in Gemischen eingesetzt werden. Aus Gründen der leichteren Herstellbarkeit werden Polyether auf Sorbit- und Saccharosebasis vorzugsweise in Mischungen mit weniger funktionellen Komponenten eingesetzt.

Als ω-Lactame mit mindestens 5 Ringgliedern werden vorzugsweise ε-Caprolactam und Laurinlactam, besonders bevorzugt ε-Caprolactam verwendet.

Als Katalysatoren können alle für die anionische Polymerisation von Lactamen bekannten Katalysatoren in üblichen Mengen eingesetzt werden, wie Alkali- und Erdalkalilactamate, vorzugsweise Na-caprolactamat, Alkali- und Erdalkalialkoholate, -hydride und -carbonate, vorzugsweise die Na-Verbindungen. Besonders bevorzugt wird Na-Caprolactamat eingesetzt.

Als Co-Katalysatoren werden aliphatische Polyisocyanate wie z.B. Hexamethylen-1,6-diisocyanat, Isophorondiisocyanat, Diisocyanatodicyclohexylmethane bzw. die entsprechenden verkappten Verbindungen vewendet.

Vorzugsweise werden aliphatische Di- oder Polyisocyanate wie Hexamethylendiisocyanat und Isophorondiisocyanat und besonders bevorzugt Biuretgruppen-haltige, Allophanathaltige und Isocynuratgruppen enthaltende Polyisocyanate auf Basis von aliphatischen Diisocyanaten eingesetzt.

Besonders bevorzugte Co-Katalysatoren im Sinne der Erfindung sind neben den in der DOS 2 746 702 beschriebenen Allophanatgruppen-haltigen Polyisocyanate auf Basis von Hexamethylen-1,6-diisocyanat, Biuretgruppen-haltige Polyisocyanate, die z.B. gemäß DAS 1 101 394 oder DOS 2 808 801 hergestellt werden.

Die Co-Katalysatoren werden in Konzentrationen eingesetzt, die mit steigender Menge an Amino-terminierten Polyethern ebenfalls steigen; in der Regel mit 0,2 bis 5 Gew.-%, vorzugsweise von 0,5 bis 3 Gew.-%, wobei die Gesamtkonzentration der Co-Katalysator-Funktionalität der Gesamtkonzentration an $NH_2$ und gegebenenfalls OH-Gruppen des Polyethers mindestens gleich sein soll.

Die erfindungsgemäß zur Blockpolymerisation mit Lactamen einzusetzenden Amino-terminierten Polyether werden in Konzentrationen von 1 bis 40 Gew.-%, vorzugsweise 5 bis 25 Gew.-%, bezogen auf die Gesamtmenge der Reaktanden, eingesetzt.

Überraschenderweise zeichnen sich die erfindungsgemäßen Produkte durch eine erheblich verbesserte Schlagzähigkeit, gerade auch bei tiefen Temperaturen, im Vergleich zu Produkten aus, die eine Funktionalität der Amino-Polyether von ≤2,5 aufweisen. Überraschenderweise sind die erfindungsgemäßen Produkte trotz des durch die Polyfunktionalität bedingten hohen Verzweigungsgrades in weiten Bereichen auch noch thermoplastisch verarbeitbar.

Die Verwendung Biuretgruppen-haltiger Polyisocyanate als Aktivatoren führt insbesondere mit 8—20 Gew.-% der erfindungsgemäßen Amino-terminierten Polyether zur Produkten, die sich durch eine besonders feindisperse Phasenverteilung auszeichnen und damit weiter verbesserte Eigenschaften (z.B. Kerbschlagzähigkeit und Wärmeformbeständigkeit) zeigen.

Zur Herstellung der Polyamid-Polyether-Blockcopolymeren können die vier erforderlichen Komponenten, nämlich Lactam, Amino-terminierte Polyether, Katalysator und Co-Katalysator, in beliebiger Reihenfolge miteinander vermischt werden.

Die Amino-terminierten Polyether können auch mit einem Teil des Co-Katalysator vor der eigentlichen Polymerisation bereits zu einem Prepolymer umgesetzt werden, wobei aber darauf geachtet werden soll, daß die Viskosität nicht zu stark ansteigt.

Am besten werden die Komponenten so untereinander vorgemischt, daß bei möglichst niedriger Temperatur lagerstabile Schmelzen vorliegen, die dann auf einfache Weise über Dosiervorrichtungen miteinander vermischt werden können. Besonders vorteilhaft werden die Komponenten auf zwei Vorratsbehälter verteilt, wobei eine Teilmenge des Lactams mit der Gesamtmenge an Co-Katalysator und der 2. Teil des Lactams mit dem Amino-terminierten Polyether und dem Katalysator vermischt wird.

Die Polymerisation erfolgt nach innigem Vermischen aller Komponenten bei Temperaturen zwischen 90 und 300°C, vorzugsweise zwischen 110 und 160°C bzw. zwischen 100 und 250°C, in wenigen Minuten.

Wird bei Temperaturen unterhalb des Schmelzpunktes des entstehenden Polyamids polymerisiert, so wird in einer Form polymerisiert, aus der wegen der selbstentformenden Eigenschaften das. fertige Formteil nach kurzer Zeit entnommen werden kann.

Wird bei höheren Temperaturen polymerisiert, so ist es vorteilhaft, die Polymerisation in einer Schneckenmaschine auszuführen, die besonders bevorzugt mit mehreren Heizzonen mit den beiden genannten Temperaturbereichen ausgestattet ist, aus der nach der Polymerisation das Polyamidpolyetherblock-copolymerisat als Strang ausgetragen, in bekannter Weise zu Granulat zerkleinert und schießlich — gegebenenfalls nach Extraktion von Monomer-Anteilen — thermoplastisch zu beliebigen Formteilen verformt wird.

Selbstverständlich kann die erfindungsgemäß durchzuführende Polymerisation auch in Gegenwart von Additiven wie Verstärkungsstoffen, z.B. Glasfasern, Mineralfasern, Füllstoffen, Nucleierungsmitteln durchgeführt werden, soweit sich diese als praktisch inert bezüglich der Polymerreaktion verhalten und die Polymerisation nicht stören.

Insbesondere die Kombination mit Glasfasern oder Füllstoffen mit dem Ziel einer weiter erhöhten Steifigkeit kann für viele Formteile vorteilhaft sein.

Die vorliegende Erfindung ist besonders geeignet, eine Vielzahl von Formteilen, wie z.B. Platten, Halbzeug, Rohre, Hohlkörper und insbesondere flächige Teile für den Automobilbau nach dem Gießverfahren oder nach dem RIM-Verfahren zu liefern.

Vorteilhaft können auch gemäß der vorliegenden Erfindung durch Verstärkung mit Kohlenstoff-Fasern oder Fasern aus aromatischen Polyamiden hochwertige, verstärkte Platten hergestellt werden.

Gemäß vorliegender Erfindung hergestellte Produkte können jedoch auch in Granulatform mit dem Ziel der anschließenden thermoplastischen Verarbeitung, z.B. in Spritzgußmaschinen, gewonnen werden.

*Charakterisierung der Aminopolyether erfindungsgemäße Aminopolyether:*
A) Durchschnittliche Funktionalität: 3,2 (beschrieben in Beispiel 1)
B) Durchschnittliche Funktionalität: 3,5 (beschrieben in Beispiel 2)
C) Durchschnittliche Funktionalität: 4,0 (Pentaerythrit, Propylenoxid 87%) Ethylenoxid 13%)
    Aminierungsgrad: 94%
    Molgewicht: 6400
D) Durchschnittliche Funktionalität: 4,0 (Pentaerythrit; Propylenoxid 87%; Ethylenoxid 13%)
    Aminierungsgrad: 82%
    Molgewicht: 6400
E) Polyether wie bei C, D, jedoch aminiert durch Reaktion mit Isophorondiisocyanat und Hydrolyse der NCO-Endgruppen (tetrafunktionell, 100% aminiert)

*nicht erfindungsgemäße Aminopolyether:*

F) Polypropylenoxid, bifunktionell Molegewicht 2.000, 100% aminiert

G) Polyether aus Trimethylolpropan und Propylenoxid, Molgewicht 2.500, Funktionalität: 3, Aminierungsgrad: 100%

H) Polyether aus Trimethylolpropan und Propylenoxid (100% aminiert, Molgewicht 7.400), durch Reaktion mit 1 Mol 4,4'-Diisocyanatodiphenylmethan, tetrafunktionalisiert, Molgewicht ca. 15.000.

K) Polyether wie bei C, D, nur zu 40% aminiert.

Die angegebenen Molgewichte wurden durch Bestimmung des OH-Endgruppengehalts der Ausgangs-Polyether ermittelt.

## Beispiel 1

65 g ε-Caprolactam, 15 g eines Aminopolyethergemisches mit einer durchschnittlichen Funktionalität von 3,2-hergestellt durch Alkoxylierung von Trimethylolpropan mit Propylenoxid und anschließende Umsetzung mit Ammoniak unter Druck (Aminierungsgrad: 100%, Mol-Gew. 4800) sowie durch analoge Alkoxylierung von Pentaerythrit und anschließende Aminierung (Aminierungsgrad: 95%, Mol-Gew. 6400) und 7,5 g einer 20%igen Lösung von Na-Lactamat im ε-Caprolactam werden unter $N_2$-Schutzgas auf 115°C erhitzt (Schmelze A).

Parallel dazu werden in einem zweiten Vorratsgefäß 58 g ε-Caprolactam mit 4,5 g eines Allophanatmodifizierten Polyisocyanats auf Basis von Hexamethylenidiisocyanat (beschrieben in DOS 2 746 702, Beispiel 2) ebenfalls auf 110°C erhitzt (Schmelze B).

Die beiden Schmelzen werden gleichzeitig einem auf 140°C erhitzten Polymerisationsgefäß zugeführt und durch Rühren gut vermischt, wobei bereits nach 60 Sekunden die Polymerisation einsetzt (meßbar über einen an ein Viskosimeter angeschlossenen Rührer), die nach weiteren 80 Sekunden beendet ist.

Man erhält einen sehr homogenen, farbhellen Polymer-Block mit typischer Polyamid-Eigenfarbe, einer sehr guten Oberfläche. Nach Kühlung auf −30°C läßt sich der Block, eingespannt in einen Schraubstock mit Hammer und Meißel nicht zerstören.

Aus dem Polymerblock wurden Probekörper zur Bestimmung mechanischer Eigenschaften aus geschnitten.

Der extrahierbare niedermolekulare Anteil (mit Methanol) beträgt 1,6%. Bestimmte Polymereigenschaften sind in Tabelle 1 aufgeführt.

## Beispiel 2

Beispiel 1 wird wiederholt mit dem Unterschied, daß als Aminopolyether-Komponente ein Gemisch aus 8 g eines Trimethylolpropan-Polyethers (Aminierungsgrad 74%, Mol-Gew. 4800) und 7 g eines Pentaerythrit-Polyethers mit Propylenoxid (Aminierungsgrad 94%, Mol-Gew. 5600), woraus sich eine durchschnittliche Funktionalität von ca. 3,5 ergibt, eingesetzt wird.

Der erhaltene Polymerblock ließ sich nach Abkühlen auf −30°C gemäß Beispiel 1 nicht zerstören. Der mit Methanol extrahierbare Monomeranteil (nur ε-Caprolactam) betragt 1,9%.

Einige Polymereigenschaften sind in Tabelle 1 aufgeführt.

## Beispiele 3—7

Analog der Versuchsdurchführung nach Beispiel 1 wurden verschiedene aminoterminierte Polyether (variiert wurden Endgruppen, Funktionalität, Mol-Gewicht, Konzentration des Polyethers in der Gesamtmischung) eingesetzt.

Die charakteristischen Zusammensetzungen der Versuchsansätze sowie Eigenschaften der erhaltenen Polymeren sind in Tabelle 1 aufgeführt.

TABELLE 1

Zusammensetzung in Gew.-%

| Beispiel: | 1 | 2 | 3 | 4 | 5 | 6 | 7 |
|---|---|---|---|---|---|---|---|
| ε-Caprolactam | 82,5 | 77,0 | 82,5 | 77,0 | 71,5 | 77,0 | 77,0 |
| Katalysator [x)] | 5 | 5 | 5 | 5 | 5 | 5 | 5 |
| Aktivator [x)] | 2,5 | 3,0 | 2,5 | 3,0 | 3,5 | 3,0 | 3,0 |
| Aminopolyether A | 10 | | | | | | |
| B | | 15 | | | | | |
| C | | | 10 | | | | |
| C | | | | 15 | | | |
| C | | | | | 20 | | |
| D | | | | | | 15 | |
| E | | | | | | | 15 |
| **Eigenschaften:** | | | | | | | |
| Monomer-Extrakt (%) | 1,6 | 1,9 | 1,1 | 2,1 | 2,2 | 2,2 | 2,9 |
| $a_k$ (23°C) (kJ/m$^2$) | 27,6 | 36,4 | 32,4 | 41,6 | 50,8[a)] | 32,5 | 36,4 |
| $a_n$ (−40°C) (kJ/m$^2$) | 80 | n.g. | n.g. | n.g. | n.g. | n.g. | n.g. |

[x)] wie in Beispiel 1 beschrieben
[a)] angebrochen
n.g. = nicht gebrochen

### Beispiele 8—13

Analog der Versuchsdurchführung nach Beispiel 1 wurden die verschiedenen Polyisocyanat-Aktivatoren I—IV, auch in Kombination mit wechselnden Mengen des Amino-terminierten Polyethers gemäß Beispiel 1 eingesetzt.

Die charakteristischen Zusammensetzungen sowie einige Eigenschaften der erhaltenen Produkte sind in Tabelle 2 aufgeführt.

Aktivator I:
Biuret-modifiziertes Polyisocyanat auf Basis Hexamethylen-1,6-diisocyanat, Visk. (23°) ~11000 mPa.s, NCO-Gehalt 22,0% (Desmodur N 100®, Bayer AG).

Aktivator II:
wie I, aber Visk. (23°) ~2500 mPa.s, NCO-Gehalt 23,0% (Desmodur N 3200®, Bayer AG).

Aktivator III:
Biuret-modifiziertes Polyisocyanat auf Basis Isophoron-Diisocyanat gemäß Beispiel 12 der DOS 28 08 801.

Aktivator IV:
Biuret-modifiziertes Polyisocyanat auf Basis Tetramethylen-diisocyanat gemäß Beispiel 4 der DOS 28 08 801.

# EP 0 167 908 B1

### TABELLE 2
#### Zusammensetzung in Gew.-%

| Beispiel: | 8 | 9 | 10 | 11 | 12 | 13 |
|---|---|---|---|---|---|---|
| ε-Caprolactam | 81,7 | 77,6 | 72,2 | 77,7 | 76,7 | 77,9 |
| Katalysator [x] | 4 | 5 | 5 | 5 | 5 | 5 |
| Aktivator I | 2,3 | 2,4 | 2,8 | — | — | — |
| Aktivator II | — | — | — | 2,3 | — | — |
| Aktivator III | — | — | — | — | 3,3 | — |
| Aktivator IV | — | — | — | — | — | 2,4 |
| Aminopolyether A | 12 | 15 | 20 | 15 | 15 | 15 |
| **Eigenschaften:** | | | | | | |
| $a_k$ (23°C, kJ/m²) | 57[a] | 70[a] | 64[a] | 53[a] | 45[a] | 60[a] |
| $a_k$ (−20°C, kJ/m²) | 21 | 38[a] | 35[a] | 35[a] | 27 | 32[a] |
| Kugeldruckhärte (N/mm²) | 85 | 75 | 63 | 86 | 72 | 79 |

[x] wie in Beispiel 1 beschrieben
[a] angebrochen

Vergleichsversuche A—D

Analog der Versuchsdurchführung bei Beispiel 1 wurden verschiedene, nicht erfindungsgemäße Vergleichsversuche durchgeführt.

Wie die in Tabelle 3 aufgeführten Rezepturen und Versuchsergebnisse zeigen, sind die dabei erhältlichen Produkte weit weniger gut als die erfindungsgemäßen Polyetherblockcopolyamide.

### TABELLE 3
#### Vergleichsversuche
#### Zusammensetzung in Gew.-%

| Versuch | A | B | C | D |
|---|---|---|---|---|
| ε-Caprolactam | 76,5 | 77,0 | 77,5 | 77,0 |
| Katalysator [x] | 5,0 | 5,0 | 5,0 | 5,0 |
| Aktivator [x] | 3,5 | 3,0 | 2,5 | 3,0 |
| Aminopolyether F | 15 | — | — | — |
| Aminopolyether G | — | 15 | — | — |
| Aminopolyether H | — | — | 15 | — |
| Aminopolyether K | — | — | — | 15 |
| Monomer-Extrakt (%) | 3,3 | 2,5 | 3,2 | 9,8 |
| $a_k$ (23°C) (kJ/m²) | 2,5 | 5,2 | 13,3 | 8,4 |
| $a_n$ (−40°C) (kJ/m²) | 8,5 | 8,8 | n.b. | n.b. |

[x] wie in Beispiel 1 beschrieben
n.b. = nicht bestimmt

7

# EP 0 167 908 B1

### Beispiel 1a—7a

Auf einer Anlage zur Herstellung von Halbzeugplatten können durch diskontinuierliche Beschickung des Plattenwerkzeugs mit den beiden beschriebenen Schmelzen (A + B) aus auf 90°C beheizten Vorratsbehältern und durch Mischen der Schmelzen über einen Dreiwegehahn vor dem Eintritt in das Werkzeug Polymerplatten hergestellt werden, die sich trotz der großen Oberfläche dieser Formteile problemlos entformen lassen, die sehr gute Oberflächenbeschaffenheit zeigen und deren mechanische Eigenschaften sehr gut mit den an Prüfkörpern gemäß Beispielen 1—7 gemessenen korrelieren.

### Beispiel 14

50 kg-Mengen der Schmelzen gemäß Beispiel 2 werden in auf 90°C beheizten Vorratsbehältern vorgelegt.

Mittels geeigneter Dosierpumpen werden die Schmelzen im Mischungsverhältis gemäß Beispiel 1 in den Einfüllstutzen eines Doppelwellenextruders gefördert, der in mehrere Heizzonen eingeteilt ist (Einzugszone: 80°C, 1. Zone: 120°C, 2. Zone: ca. 200°C, 3. Zone: 260°C, Austritt).

Bei einem Durchsatz von 24 kg pro h wurde am Extruderaustritt ein Kunststoffstrang ausgetragen, der, wie von Polyamiden bekannt, zu Granulat zerkleinert werden konnte.

Der Monomerextrakt betrug 11,0% (nur $\varepsilon$-Caprolactam).

Das extrahierte und gut getrocknete Granulat läßt sich problemlos auf Spritzgießmaschinen zu leicht entformbaren Formkörpern verarbeiten, die eine sehr hohe Kerbschlagzähigkeit bei Raumtemperatur (42 kJ/m$_2$) aufweisen, wobei die Formkörper steifer sind (höherer Modul) als analoge Formkörper, die aus gegossenen Teilen herausgearbeitet worden waren.

Bei Messung der Schlagzähigkeit bei −40°C erfolgte kein Bruch.

### Patentansprüche

1. Polyamidpolyetherblockcopolymere, hergestellt durch aktivierte anionische Polymerisation von Lactamen mit wenigstens 5 Ringgliedern in Gegenwart bekannter basischer Katalysatoren, Polyisocyanaten als Cokatalysatoren und von aminoterminierten Polyethern, dadurch gekennzeichnet, daß die aminoterminierten Polyether(gemische) eine Funktionalität von mindestens 3,2, ein Molekulargewicht von >3.000 und einen Aminierungsgrad von mindestens 60% aufweisen und in Mengen von 1—40 Gew.-%, bezogen auf die Gesamtmenge $\omega$-Lactam und aminoterminierten Polyethern, eingesetzt werden.

2. Blockcopolymere nach Anspruch 1, dadurch gekennzeichnet, daß die Polyether ein Molekulargewicht von mindestens 3.500 aufweisen.

3. Blockcopolymere nach Anspruch 1 oder 2, dadurch gekennzeichnet, daß die aminoterminierten Polyether solche der allgemeinen Formel I sind

$$\left[ (HO)Y \!-\!\!\left[\,\right]_m\!\!- Z -\!\left[ \!-\! X(NH_2) \right]_n \right] \qquad (I),$$

wobei

Z ein n + m-wertiger Kohlenwasserstoffrest, der gegebenenfalls über eine oder mehrere —O— Brücken verbunden ist, mit m = 0—2, n = 2—8, und n + m = 3,2—6,

X ein Polyetherrest mit der p-mal wiederkehrenden Struktureinheit der Formel II

$$\left[ \begin{matrix} R^1 \\ | \\ -OCH\!-\!(CH_2)_{\overline{q}} \end{matrix} \right] \qquad (II),$$

in der R$^1$ H oder einen C$_1$—C$_3$-Alkylrest, q eine ganze Zahl von 1—5 bedeutet und p wenigstens 15 ist, und Y = X oder eine chemische Bindung und im Falle von Polyethergemischen n ≥ 2 m sein muß.

4. Blockcopolymere nach Ansprüchen 1 bis 3, dadurch gekennzeichnet, daß in der allgemeinen Formel I n = 3—6 und n + m = 3,2—6 und in der allgemeinen Formel II q eine ganze Zahl von 1—3 bedeutet.

5. Blockcopolymere nach Ansprüchen 1 bis 4, dadurch gekennzeichnet, daß als aminoterminierte Polyether solche eingesetzt werden, die, ausgehend von Glycerin, Trimethylolpropan, Pentaerythrit, α,α'-Bis-(dimethylolpropan)dimethylether, Sorbit gewonnen wurden und zum Aufbau der Polyetherketten überwiegend Propylenoxid und Tetrahydrofuran eingesetzt wurde und der Aminierungsgrad mindestens 60% beträgt.

6. Blockpolymere nach Ansprüchen 1 bis 5, dadurch gekennzeichnet, daß der Aminierungsgrad der aminoterminierten Polyether ≥85 Gew.-% beträgt.

7. Blockpolymere nach Ansprüchen 1 bis 6, dadurch gekennzeichnet, daß als Cokatalysatoren aliphatische Polyisocyanate oder entsprechende verkappte Verbindungen in Mengen von 0,2 bis 5 Gew.-% eingesetzt werden, wobei die Gesamtkonzentration der Cokatalysator-Funktionalität der Gesamtkonzen-

EP 0 167 908 B1

tration an NH₂ und gegebenenfalls OH-Gruppen des Polyethers mindestens gleich sein soll.

8. Blockcopolymere nach Ansprüchen 1 bis 7, dadurch gekennzeichnet, daß als Aktivatoren Allophanat- oder Biuretgruppen-haltige Polyisocyanate eingesetzt werden.

9. Blockcopolymere nach Ansprüchen 1 bis 8, dadurch gekennzeichnet, daß die aminoterminierten Polyether in Mengen von 5 bis 25 Gew.-% eingesetzt werden.

## Revendications

1. Copolymères séquencés polyamide-polyéthers préparés par polymérisation anionique activée de lactames à au moins cinq chaînons cycliques en présence de catalysateurs basiques connus, de polyisocyanates servant de catalyseurs auxiliaires et de polyéthers à groupes terminaux amino, caractérisés en ce que les polyéthers (mélanges) à groupes terminaux amino ont une fonctionnalité d'au moins 3,2, un poids moléculaire supérieur à 3 000 et un taux d'amination d'au moins 60% et sont mis en oeuvre en quantités de 1 à 40% en poids par rapport à la quantité totale de l'omégalactame et des polyéthers à groupes terminaux amino.

2. Copolymères séquencés selon la revendication 1, caractérisés en ce que les polyéthers ont un poids moléculaire d'au moins 3 500.

3. Copolymères séquencés selon la revendication 1 ou 2, caractérisés en ce que les polyéthers à groupes terminaux amino répondent à la formule générale I

$$\left[ (HO)Y \underset{m}{-\!\!\!-} Z \underset{}{-\!\!\!-} \left[ X(NH_2) \right]_n \right] \quad (I),$$

dans laquelle

Z est un radical hydrocarboné de valence n + m éventuellement relié par l'intermédiaire d'un ou plusieurs ponts —O—, avec m = 0 à 2, n = 2 à 8 et n + m = 3,2 à 6,

X est un radical de polyéther contenant le motif de structure, répété p fois, de formule II

$$\left[ \underset{|}{\overset{R^1}{-}} OCH-(CH_2)_q - \right] \quad (II),$$

dans laquelle R¹ représente H ou un groupe alkyle en $C_1$—$C_3$, q est un nombre entier de 1 à 5 et p est égal au moins à 15 et

Y a la même signification que X ou représente une liaison chimique, et, dans le cas de mélanges de polyéthers, n doit être égal ou supérieur à 2 m.

4. Copolymères séquencés selon les revendications 1 à 3, caractérisés en ce que, dans la formule générale I, n = 3 à b et n + m = 3,2 à b et, dans la formule generale II, q est un nombre entier allant de 1 à 3.

5. Copolymères séquencés selon les revendications 1 à 4, caractérisés en ce que, pour leur préparation, on utilise des polyéthers à groupes terminaux amino qui ont été obtenus à partir du glycérol, du triméthylolpropane, du pentaérythritol, de l'éther alpha,alpha'-bis-(diméthylolpropane)-diméthylique, du sorbitol, avec principalement, pour la synthèse des chaînes de polyéthers, de l'oxyde de propylène et du tétrahydrofuranne, et à un taux d'amination qui est d'au moins 60%.

6. Polymères séquencés selon les revendications 1 à 5, caractérisés en ce que le taux d'amination des polyéthers à groupes terminaux amino est supérieur ou égal à 85% en poids.

7. Polymères séquencés selon les revendications 1 à 6, caractérisés en ce que, pour leur préparation, on utilise en tant que catalyseurs auxiliaires des polyisocyanates aliphatiques ou les composés correspondants bloqués en quantités de 0,2 à 5% en poids, la concentraton totale en fonction du catalyseur auxiliaire devant être au moins égale à la concentration totale en groupes NH₂ et éventuellement OH du polyéther.

8. Copolymères séquencés selon les revendications 1 à 7, caractérisés en ce que, pour leur préparation, on utilise en tant qu'activateurs des polyisocyanates contenant des groupes allophanate ou biuret.

9. Copolymères séquencés selon les revendications 1 à 8, caractérisés en ce que, pour leur préparation, on met en oeuvre les polyéthers à groupes terminaux amino en quantités de 5 à 25% en poids.

## Claims

1. Polyamide/polyether block copolymers prepared by activated anionic polymerization of lactams containing at least 5 ring members in the presence of known basic catalysts, polyisocyanates as co-catalysts and amino-terminated polyethers, characterized in that the amino-terminated polyether (mixtures) have a functionality of at least 3.2, a molecular weight of >3,000 and a degree of amination of at

9

least 60% and are used in quantities of from 1 to 40% by weight, based on the total quantity of ω-lactam and amino-terminated polyethers.

2. Block copolymers as claimed in claim 1, characterized in that the polyethers have a molecular weight of at least 3,500.

3. Block copolymers as claimed in claim 1 or 2, characterized in that the amino-terminated polyethers used correspond to general formula I

$$\left[ (HO)Y \underset{m}{\overline{\phantom{xx}}} Z \overline{\phantom{xx}} \left[ X(NH_2) \right]_n \right] \tag{1},$$

in which

Z is an $n + m$-functional hydrocarbon radical optionally attached through one or more —O— bridges, with $m = 0$—2, $n = 2$—8 and $n + m = 3.2$—6,

X is a polyether group containing the structural unit of formula II recurring p-times

$$\left[ \begin{array}{c} R^1 \\ | \\ OCH-(CH_2)_q \end{array} \right] \tag{II},$$

in which

$R^1$ is H or a $C_{1-3}$ alkyl radical, q is a integer of 1 to 5 and p is at least 15 and

Y = X or is a chemical bond and, in the case of polyether mixtures, $n \geq 2 m$.

4. Block copolymers as claimed in claims 1 to 3, characterized in that, in general formula I, $n = 3$—6 and $n + m = 3.2$—6 and, in general formula II, q is an integer of 1—3.

5. Block copolymers as claimed in claims 1 to 4, characterized in that the amino-terminated polyethers used are of the type which have been obtained from glycerol, trimethylol propane, pentaerythritol, α,α'-bis-(dimethylolpropane)-dimethyl ether and sorbitol; propylene oxide and tetrahydrofuran having been predominantly used for synthesis of the polyether chains and the degree of amination being at least 60%.

6. Block copolymers as claimed in claims 1 to 5, characterized in that the degree of amination of the amino-terminated polyethers is ≥85% by weight.

7. Block polymers as claimed in claims 1 to 6, characterized in that aliphatic polyisocyanates or corresponding masked compounds are used in quantities of 0.2 to 5% by weight as co-catalysts, the total concentration of the co-catalyst functionality having to be at least equal to the total concentration of $NH_2$ and, optionally, OH groups of the polyether.

8. Block copolymers as claimed in claims 1 to 7, characterized in that polyisocyanates containing allophanate or biuret groups are used as activators.

9. Block copolymers as claimed in claims 1 to 8, characterized in that the amino-terminated polyethers are used in quantities of 5 to 25% by weight.